# EUROPEAN PATENT SPECIFICATION

(11) **EP 1 692 691 B1**
(45) Date of publication and mention of the grant of the patent: **30.01.2008**
(21) Application number: 04799015.5
(22) Date of filing: 25.11.2004
(51) Int. Cl.: G11B 7/007, G11B 7/14

(54) **OPTICAL DISC STORAGE WITH 2D-DATA-TRACK AND WITH GUARD BAND STORING NON-CONTENT INFORMATION AND READING DEVICE THEREFORE**
OPTISCHE DATENTRÄGERSPEICHERUNG MIT 2D-DATENSPUR UND SCHUTZBAND ZUR SPEICHERUNG VON NICHT-INHALTS-INFORMATIONEN UND LESEEINRICHTUNG DAFÜR
STOCKAGE SUR DISQUE OPTIQUE A PISTE DE DONNEES EN 2D ET A INTERPISTE MEMORISANT DES INFORMATIONS NON-CONTENU, AINSI QUE DISPOSITIF DE LECTURE CORRESPONDANT

(30) Priority: 02.12.2003 EP 03300241
(43) Date of publication of application: 23.08.2006
(73) Proprietor: Koninklijke Philips Electronics N.V., 5621 BA Eindhoven (NL)
(72) Inventor: TUKKER, Teunis, Willem, 75008 Paris (FR); LIEDENBAUM, Coen, Theodorus, Hubertus, Franciscus, 75008 Paris (FR); VAN DER LEE, Alexander, Marc, 75008 Paris (FR); BUSCH, Christopher, 75008 Paris (FR)
(74) Representative: van Oudheusden-Perset, Laure E.
(86) International application number: PCT/IB2004/003915
(87) International publication number: WO 2005/055212

(56) References cited:
- WO-A-01/86350
- WO-A-20/04032334
- US-A- 4 980 882
- US-A- 5 508 990
- US-A- 5 657 308
- US-A1- 2001 033 543
- US-A1- 2002 176 335
- US-A1- 2003 043 344
- WIM M. J. COENE: "Nonlinear signal-processing model for scalar diffraction in optical recording" APPLIED OPTICS, vol. 42, no. 32, 10 November 2003 (2003-11-10), pages 6525-6535, XP002322900
- A.H.J. IMMINK, W.M.J. COENE, ET. AL.: "Signal Processing and Coding for Two-Dimensional Optical Storage" IEEE GLOBECOM 2003, 1 November 2003 (2003-11-01), pages 3904-3908, XP002322901

## Description

### FIELD OF THE INVENTION

The present invention relates to An optical disk storage medium carrying meta-tracks ofN (N>1) bit-rows that store content information, the meta-tracks forming a spiral with several turns where adjacent meta-tracks are separated by a guard band of at least one bit-row referred to as guard band bit-row.

The present invention also relates to a device for reading an optical disc storage medium that carries meta-tracks ofN (N>1) bit-rows, where the meta-tracks form a spiral where two adjacent meta-tracks are separated by a guard band of at least one bit-row referred to as guard band bit-row.

The present invention applies to two-dimensional optical storage for example two-dimensional Blu-Ray discs.

### BACKGROUND OF THE INVENTION

The principles of two-dimensional optical storage are presented in the article "Two-Dimensional Optical Storage" by M.J. Coene, Optical Data Storage May 11-14, 2003 Hyatt Regency Vancouver, BC Canada. As explained in this article, the format of 2D disc is based on a broad spiral consisting of a number of parallel bit-rows that are aligned with each other in the radial direction in such a way that a 2D close-packed lattice results. The lattice can have various forms. However hexagonal lattices provide a higher packing fraction. A guard band of one empty bit-row is located between adjacent turns of the broad spiral.

The channel bits that are written on the disc are of the land type (bit "0") or of the pit-type (bit "1"). A physical bit-cell in the lattice is associated with each bit. The bit-cell for a land-bit is a uniform flat area at land-level. A pit-bit is realized via mastering a pit-hole centered in the bit-cell.

Parallel read-out is realized by using a single laser source that passes through a diffraction grating which produces an array of laser spots that scans the full width of the broad spiral. The light from each laser spot is diffracted by the 2D pattern on the disc and is detected on a multi-partitioned photodetector which generates a number of high frequency signal waveforms. This set of waveforms is used as the input for the 2D signal processing.

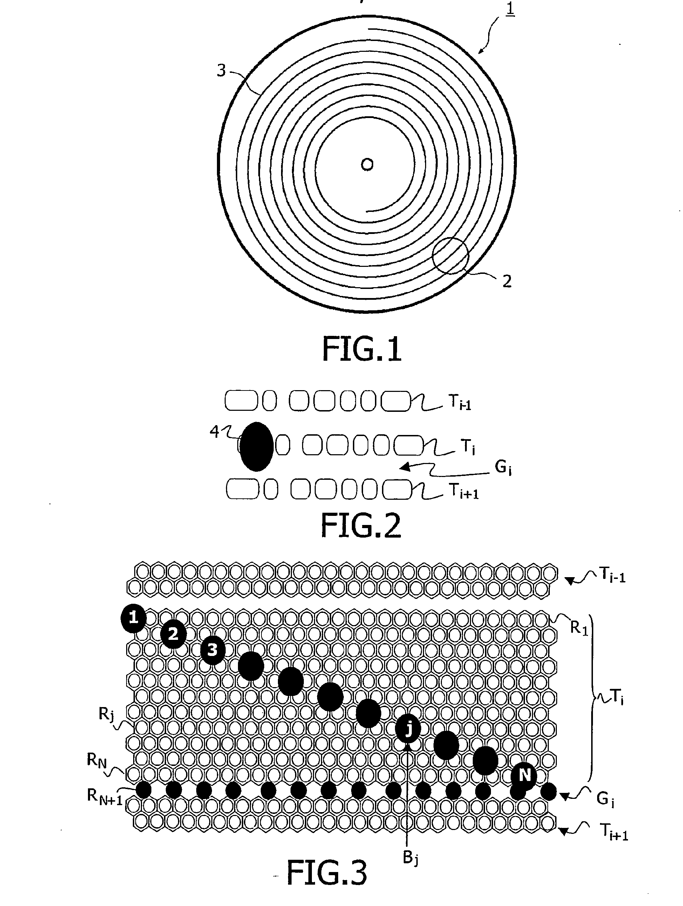

The signal processing path from the photo detector to the detected bits comprises: analog-to-digital conversion, pre-filtering, signal alignment, equalization, sample rate conversion and eventually bit detection. As can be seen from Fig.2 of this article, the timing information needed for controlling the sample rate converter is extracted from the content data carried by the broad spiral.

The present invention proposes improvements for a two-dimensional optical storage of the type described in this article.
The article "Nonlinear signal-processing model for scalar diffraction in optical recorcing", APPLIED OPTICS, 10 November 2003, vol. 42, No. 32, 6525-6535, which is used for the two-part form delimitation, discloses an optical disc storage medium with meta-tracks ofN bit-rows that store content information, and a guard band consisting of one empty bit row.

### SUMMARY OF THE INVENTION

A storage medium according to the invention is defined in claims 1 to 3. A device according to the invention for reading a storage medium is defined in claims 4 to 8.

According to the invention non-content information is stored in the guard band separating two meta-tracks (that is two 360° turns of the broad spiral). This non-content information comprises clock data and/or control data that are needed for controlling reading/writing operations from/onto the storage medium. For instance control data comprise: speed control data for controlling the rotation speed of the storage medium, sector marks for defining sectors on the storage medium, address information for navigation through the content, digital right management information, etc...

Preferably, the signal carried in the guard band shall remain relatively regular. The clock data is a regular high-frequency pattern. In order that the regularity of the signal carried in the guard band is not damaged, and to facilitate the discrimination of the control data from the content data carried by the meta-tracks, the control data are preferably low-frequency data. When both clock data and control data are stored in the guard band, the clock data are modulated with the control data for example the clock data are phase modulated or amplitude modulated.

A device according to the invention for reading such a storage medium comprises:
- an optical unit for generating at least N light spots, receiving at least N reflected light spots and generating at least N analog signals associated each to one of said reflected light spots, in order to read in parallel a meta-track and a guard band bit-row adjacent to said meta-track, and
- means for processing at least N of said analog signals in order to recover content information stored in said meta-track and non-content information stored in said adjacent guard band bit-row.

The number of light spots generated by the optical unit depends on the implementation. If only N light spots are used, the non-content information carried by the guard band is derived from the N^{th} reflected light spot (generally referred to as read-out light spot). Alternatively an extra light spot can be used for reading the guard band bit-row. For design simplicity, it may be preferred to add more than one extra light spot. In such a case, the reflected light spot(s) above the N+1 necessary reflected light spots is/are not needed for implementing the invention.

The structure of the processing means depends on the nature of the non-content information carried in the guard band.

When the non-content information comprise clock data, the processing means comprise:
- an analog-to-digital converter for receiving at least N of said analog signals and generating at least N digital signals,
- a phase-locked loop circuit for receiving one of said digital signals that is associated to a light spot that is at least partly reflected by said guard band bit-row such that said digital signal carries said non-content information, and for generating a clock correction signal therefrom,
- a sample rate converter controlled by said clock correction signal, for receiving N of said digital signals and for generating N corrected digital signals,
- a first detection circuit for receiving said N corrected digital signals and deriving therefrom N sequences of bits that correspond to said content information.

The analog-to-digital converter is controlled by a local clock so that the digital signals that are generated by the analog-to-digital converter are to be phase-corrected by the sample rate converter. In this embodiment, the sample rate converter is controlled by a clock correction signal generated by a phase-locked loop circuit from the clock data carried in the guard band.

The frequency of the clock data (referred to as pilot frequency in the following of the description) in the guard band may be equal to the local clock frequency. However this is not required. When the pilot frequency is different from the local clock frequency, the phase-locked loop circuit makes a frequency adaptation. Advantageously the pilot frequency is chosen equal to the highest possible frequency that occurs in the system (which depends on the form of the lattice) but shall remain lower than the cut-off frequency of the optical unit.

Storing clock data in the guard band is a very simple and efficient way of enabling recovery of the bit clock rate, especially in 2D storage systems where the intersymbol interference between bit-rows of the meta-track is so high that using the traditional zero-crossing clock recovery method would lead to very complex signal processing.

When the non-content information comprise control data in addition to clock data, the processing means further comprise a second detection circuit for receiving said clock correction signal and deriving therefrom a sequence of bits that corresponds to said control data.

When the non-content information comprise control data to the exclusion of clock data, the processing means comprise:
- an analog-to-digital converter for receiving at least N of said analog signals and generating at least N digital signals,
- a sample rate converter for receiving said at least N digital signals and for generating at least N corrected digital signals,
- a detection circuit comprising:
   a) means for receiving N corrected digital signals and deriving therefrom a reference signal and N sequences of bits that correspond to said content information, and
   b) means for receiving one corrected digital signal that is associated to a light spot that is at least partly reflected by said guard band bit-row such that said corrected digital signal carries said control data, and deriving therefrom a sequence of bits corresponding to said control data,
- a time recovery circuit for receiving said reference signal and at least part of said N corrected digital signals, and for generating an time correction signal used for controlling said sample rate converter.

In the absence of clock data in the guard band, the timing information used to control the sample rate converter is extracted from the content data in a classical way. The signal that carries the control data is processed in parallel with the signals that carry the content information through the same circuits.

Storing control data in the guard band is an interesting alternative to track wobbling currently used in some 1D storage systems.

### BRIEF DESCRIPTION OF THE DRAWINGS

These and other aspects of the invention are further described by reference to the following drawings:
- Fig.1 is a schematic representation of a storage medium according to the invention,
- Fig. 2 and Fig. 3 are a detailed view of a portion of the storage medium of Fig.1,
- Fig.4 is a general diagram of a device according to the invention for reading a storage medium of the type described by reference to Fig.1 to 3,
- Fig. 5 is a first example of an embodiment of the device of Fig. 4,
- Fig. 6 is a second example of an embodiment of the device of Fig. 4,
- Fig. 7 is a third example of an embodiment of the device of Fig. 4.

### DESCRIPTION OF EMBODIMENTS

Fig.1 shows a storage medium 1. Fig.2 and Fig.3 show a portion 2 of the storage medium 1 in a first and a second larger scale respectively. The storage medium 1 is a disc having meta-tracks Tᵢ forming each a 360° turn of a spiral line 3. As shown in Fig.3, each meta-track Tᵢ comprises N parallel bit-rows R₁, ..., R_{N} that are aligned with each other in the radial direction in such a way that a 2D close-packed hexagonal lattice results. A physical hexagonal bit-cell in the lattice is associated with each bit Bⱼ (j=1 to N). A guard band Gᵢ of one bit-row R_{N+1} is located between adjacent turns Tᵢ and Tᵢ₊₁ of the spiral 3. The meta-tracks carry content information (for example audio data and/or video data and associated application data).

According to the invention a signal that carries non-content information is stored in the guard band Gᵢ during the mastering process of the disc. Said non-content information comprise clock data and/or control data.

The tracks are scanned by a radiation beam 4 that enters the storage medium through a transparent substrate (not represented). Multiple light sources are used for scanning in parallel the N+1 bit-rows composed of the N bit-rows of a meta-track Tᵢ plus the one-bit row of the adjacent guard band Gᵢ. For example, the multiple light source comprises a single laser source and a diffraction grating. The diffraction grating must produce at least N light spots. Preferably the diffraction grating produces at least N+1 light spots, the N+1^{th} light spot being dedicated to the reading of said guard band bit-row.

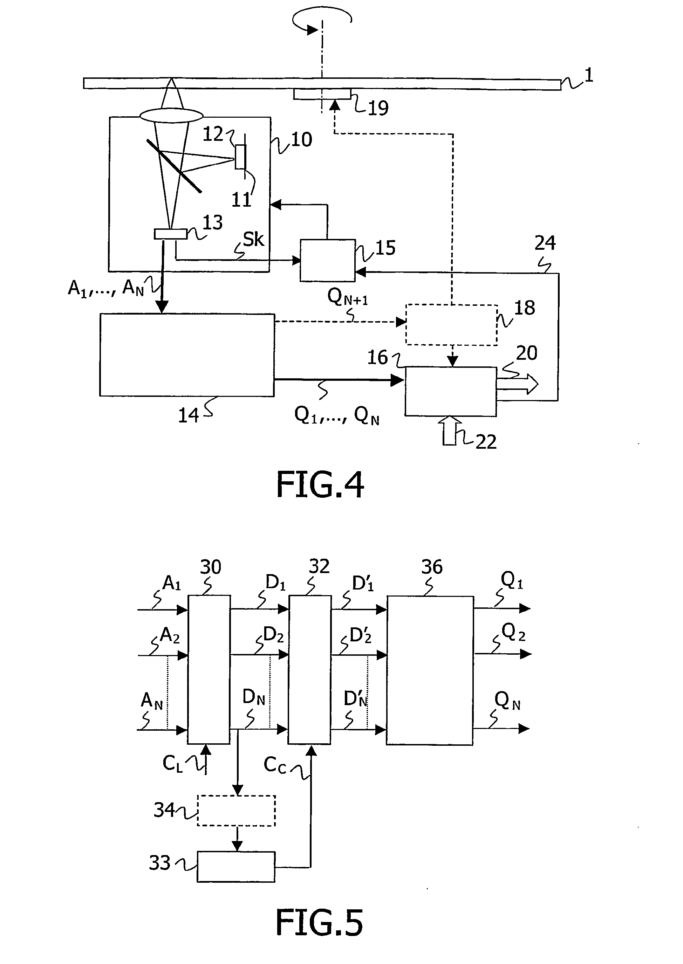

When N light spots are used, the N^{th} light spot is used for scanning both the outer bit-row R_{N} and the guard-band bit-row R_{N+1}. In such a case the signal is deteriorated by inter-symbol interference but, as will be described in more details by reference to Fig. 5, the performances are still acceptable. When desired, better performances can be achieved by using N+1 light spots. When a grating is used to generate multiple light spots from a single laser source, this implies modifying the prior art grating design. When modifying the grating design, it may be easier to add more than one light spot. If the grating generates more than N+1 light spots, the overhead light spots are not needed for implementing the invention. Therefore they may be ignored.

Fig.4 shows a general schematic block diagram of a device according to the invention. The device of Fig.4 comprises an optical unit 10 having a single laser source 11 and a grating 12 for generating N light spots. N reflected light spots are received by the optical unit 10 and detected by a photodetector 13. The photodetector 13 generates N analog signals A₁, ..., AN associated each to one of the reflected light spots. The N analog signals A₁, ..., AN are forwarded to a signal processing unit 14. The photodetector 13 also generates one or more servo control signals Sk that are forwarded to a servo control circuit 15. The servo control circuit 15 controls the optical unit 10. The signal processing unit 14 outputs N bits sequences Q₁, ..., Q_{N} corresponding to the content information carried by the meta-tracks, and optionally one bits sequence Q_{N+1} corresponding to the control data carried by the guard band. The N bits sequences Q₁, ..., Q_{N} are forwarded to a rendering unit 16 that renders the content to the user.

The destination of the optional bits sequence Q_{N+1} depends on the nature of the control data. In Fig.4, the bits sequence Q_{N+1} is forwarded to a processor 18. Depending on the nature of the control data, the processor 18 may generate control signals towards the rendering unit 16 and/or towards a motor unit 19 responsible for rotating the disc 1. For example when the control data comprise speed control data, the processor 18 generates a control signal towards the motor unit 19. When the control data comprise sector marks and/or addressing information, the processor 18 generates a control signal towards the rendering unit 16. The arrow 20 in Fig.4 represents content delivery to the user. The arrow 22 represents user inputs, for example selections within an on-screen displayed menu. The arrow 24 represents control signals sent by the rendering unit 16 to the servo control circuit 15 upon user input.

The elements represented in dashed-line in Fig.4 are optional elements. Said optional elements are omitted in some of the embodiments of the invention as will be apparent from the following of the description.

Fig.5 shows a first embodiment of the processing unit 14 that is used when the non-content information comprises clock data only. In this example, only N analog signals are generated by the optical unit 10. An embodiment with an additional light spot dedicated to the reading of the guard band (and therefore N+1 input analog signals) will be easily derived from Fig. 5 by the man skilled in art.

In Fig.5, the processing unit 14 receives N analog signals A₁, ..., AN. The analog signals A₁, ..., AN are input to a analog-to-digital converter 30 operated with a local clock C_{L}. The N digital signals D₁, ..., D_{N} generated by the analog-to-digital converter 30 are forwarded to a sample rate converter 32. The N^{th} digital signal D_{N} is also forwarded to a phase-locked loop circuit 33 (optionally after going through a pre-filter 34 for band-pass filtering).The sample rate converter 32 is controlled by a clock correction signal C_{c} delivered by the phase-locked loop circuit 33. The sample rate converter 32 outputs N phase-corrected digital signals D'₁, ..., D'_{N} that are forwarded to a first decision circuit 36. The first decision circuit 36 delivers the N bit sequences Q₁, ..., Q_{N}. For example, the first decision circuit 36 is a maximum likelihood detector, preferably a Viterbi detector.

The optional pre-filter is used for cleaning up the digital signal D_{N} before it is passed to the phase-locked loop circuit 33. As the clock signal is very well localized in the frequency space, a large part of unwanted signal can be removed by using a band pass filter upstream the phase-locked loop circuit 33. However, it is to be noted that the phase-locked loop circuit in itself is a very efficient band pass filter and therefore using a pre-filter upstream the phase-locked loop circuit is not mandatory.

When only N analog signals are available, the digital signal D_{N} that is used for generating the clock correction signal is deteriorated by inter-symbol interferences (data cross-talk from the neighbor bit-row). However, the phase-locked loop circuit 33 has intrinsic band pass filtering capabilities such that the high frequency data coming from the neighbor bit-row will be filtered out. This is the reason why the performances obtained by using only N analog signals are acceptable.

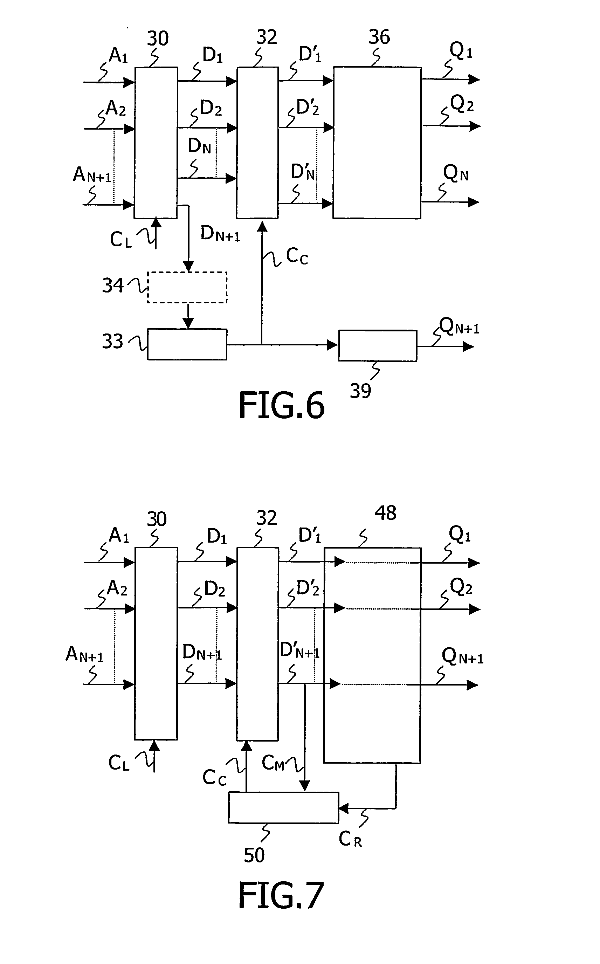

Fig.6 shows a second embodiment of the processing unit 14 that is used when the non-content information comprises clock data and control data. In this example, N+1 analog signals are generated by the optical unit 10, one of these analog signals (A_{N+1}) being dedicated to the reading of the guard band. An embodiment with N light spots only, will be easily derived from Fig.6 by the man skilled in art.

In Fig.6, an additional analog signal A_{N+1} is input to the analog-to-digital converter 30 and the analog-to-digital converter 30 generates an additional digital signal D_{N+1} from this additional analog signal A_{N+1}. The digital signal D_{N+1} is input to the pre-filter 34 and forwarded to the phase-locked loop circuit 33. The clock correction signal generated by the phase-locked loop circuit 32 is forwarded to a second detection circuit 39. The second decision circuit 39 output the bits sequence Q_{N+1} corresponding to the control data carried by the guard band.

The nature of the decision circuit 39 depends on the type of modulation used to modulate the clock data in the guard band. For example, if the clock data are amplitude modulated with the control data, the second decision circuit 39 is designed to monitor the amplitude of the clock correction signal C_{c} in order to recover the control data. If the clock data are phase modulated with the control data, the second decision circuit 39 is designed to monitor the phase of the clock correction signal C_{c} in order to recover the control data. These examples are not restrictive. Other schemes can be used as well.

Fig.7 shows a third embodiment of the processing unit 14 that is used when the non-content information comprises control data only. In this example N+1 analog signals are generated by the optical unit 10. An embodiment using N analog signals only, where the bits sequence Q_{N+1} is derived from the analog signal AN will be easily derived from Fig.7 by the man skilled in the art.

In Fig.7, the phase-corrected digital signal D'₁ to D'_{N+1} are input to a decision circuit 48. The decision circuit 48 is of the same type as the decision circuit 36. The decision circuit 48 generates the bits sequences Q₁ to Q_{N+1}. The decision circuit 48 also generates a reference signal C_{R} that represents the ideal response of the channel (the decision circuit assumes a certain ideal response). This reference signal is derived from at least one of the bit sequences Q₁, ..., Q_{N+1} and from the assumed ideal response of the channel. The reference signal C_{R} is input to a time recovery circuit 50. The time recovery circuit 50 also receives an actual signal C_{M} constituted of those of the corrected digital signal D'_{I}, ..., D'_{N} that are associated with the bit sequences Q₁, ..., Q_{N} used to derive the reference signal C_{R}. The time recovery circuit 50 derives an error signal (equal to the difference between the reference signal and the actual signal) and generate a time correction signal C_{c} that minimizes the error signal (this can be done by a zero-forcing loop or an MMSE loop as described in chapters 10.6 and 10.7 of the book "Digital Baseband Transmission and Recording" by Jan W.M. Bergmans, Kluwer Acamedi Publishers, 1996). The time correction signal C_{c} is used for controlling the sample rate converter 32.

The schematic diagram of Fig.4, 5, 6 and 8 only show the elements that are necessary for the complete understanding of the invention. Other elements not shown in these Figs. may be required in practice for proper operations. For example the signal processing path usually comprises in addition to the above-described elements an equalizer, gain and DC compensation loops, anti-aliasing filters...

With respect to the above-described storage medium and device, modifications or improvements may be proposed without departing from the scope of the invention. The invention is thus not limited to the examples provided.

In particular the invention is not limited to the use of a single laser source in association with a diffraction grating. Other types of multiple light sources can be used, for example a laser array, or a fibre optic arrangement.

Use of the verb "comprise" and its conjugation in the text and in the claims doesn't exclude the presence of other means or steps than those listed.

Use of the article "a" for designating an element doesn't exclude the presence of a plurality of such elements.

## Claims

1. An optical disc storage medium (1) carrying meta-tracks (Tᵢ) of N bit-rows (Rⱼ), where N > 1, that store content information, the meta-tracks (Tᵢ) forming a spiral (3) with several turns
where adjacent turns of the meta-tracks are separated by a guard band (Gᵢ) of at least one bit-row referred to as guard band bit-row,
**characterized in that** at least one guard band (Gᵢ) bit-row stores non-content information.

2. A storage medium (1) as claimed in claim 1 wherein said non-content information comprises clock data to be used for reading said content information from said storage medium (1).

3. A storage medium (1) as claimed in one of claims 1 or 2 wherein said non-content information comprises control data to be used for reading/writing content information from/onto said storage medium (1).

4. A device for reading an optical disc storage medium (1) that carries meta-tracks (Tᵢ) of N bit-rows (Rⱼ), where N>1, the meta-tracks (Tᵢ) forming a spiral (3) with several turns where adjacent meta-tracks are separated by a guard band (Gᵢ) of at least one bit-row referred to as guard band bit-row, said device comprising:
- an optical unit (10) for generating at least N light spots, receiving at least N reflected light spots and generating at least N analog signals associated each to one of said reflected light spots, in order to read in parallel a meta-track (Tᵢ), and
- means (14) for processing at least N of said analog signals in order to recover content information stored in said meta-track (Tᵢ),
**characterized by** comprising an optical unit (10) for generating a light spot, receiving a reflected light spot and generating an analog signal associated to the reflected light spot in order to recover non-content information stored in said adjacent guard band (Gᵢ) bit-row.

5. A device as claimed in claim 4 wherein, said non-content information comprising clock data, said processing means (14) comprise:
- an analog-to-digital converter (30) for receiving at least N of said analog signals and generating at least N digital signals,
- a phase-locked loop circuit (33) for receiving one of said digital signals that is associated to a light spot that is at least partly reflected by said guard band (Gᵢ) bit-row such that said digital signal carries said non-content information, and for generating a clock correction signal therefrom,
- a sample rate converter controlled by said clock correction signal, for receiving N of said digital signals and for generating N corrected digital signals,
- a first detection circuit for receiving said N corrected digital signals and for delivering N sequences of bits that correspond to said content information.

6. A device as claimed in claim 5 wherein, said non-content information comprising control data, said processing means (14) further comprise a second detection circuit (39) for receiving said clock correction signal and deriving therefrom a sequence of bits that corresponds to said control data.

7. A device as claimed in claims 5 or 6, wherein said optical unit (10) is designed for generating a specific light spot dedicated to the reading of said guard band (Gᵢ) bit-row, and said phase-locked loop circuit (33) receives the digital signal derived from said specific light spot.

8. A device as claimed in claim 4 wherein, said non-content information comprising control data to the exclusion of clock data, said processing means (14) comprise:
- an analog-to-digital converter (30) for receiving at least N of said analog signals and generating at least N digital signals,
- a sample rate converter (32) for receiving said at least N digital signals and for generating at least N corrected digital signals,
- a detection circuit comprising:
a) means (36) for receiving N corrected digital signals and deriving therefrom a reference signal and N sequences of bits that correspond to said content information, and
b) means (39) for receiving one corrected digital signal that is associated to a light spot that is at least partly reflected by said guard band (Gᵢ) bit-row such that said corrected digital signal carries said control data, and deriving therefrom a sequence of bits corresponding to said control data,
- a time recovery circuit (50) for receiving said reference signal and at least part of said N corrected digital signals, and for generating a time correction signal used for controlling said sample rate converter (32).

## Patentansprüche

1. Optisches Plattenspeichermedium (1), das Metaspuren (Tᵢ) von N, wobei N>1 ist, Bitreihen (Rⱼ) trägt, welche Inhaltsinformationen speichern, wobei die Metaspuren (Tᵢ) eine Spirale (3) mit mehreren Windungen bilden, wobei benachbarte Windungen der Metaspuren durch ein Schutzband (Gᵢ) von mindestens einer Bitreihe getrennt sind, die als Schutzband-Bitreihe bezeichnet wird,
**dadurch gekennzeichnet, dass** mindestens eine Bitreihe des Schutzbandes (Gᵢ) Nicht-Inhaltsinformationen speichert.

2. Speichermedium (1) nach Anspruch 1, wobei die Nicht-Inhaltsinformationen Taktdaten umfassen, die zu verwenden sind, um die Inhaltsinformationen von dem Speichermedium (1) zu lesen.

3. Speichermedium (1) nach einem der Ansprüche 1 oder 2, wobei die Nicht-Inhaltsinformationen Steuerungsdaten umfassen, die zu verwenden sind, um Inhaltsinformationen von dem/auf das Speichermedium (1) zu lesen/zu schreiben.

4. Einrichtung zum Lesen eines optischen Plattenspeichermediums (1), das Metaspuren (Tᵢ) von N, wobei N>1 1 ist, Bitreihen (Rⱼ) trägt, wobei die Metaspuren (Tᵢ) eine Spirale (3) mit mehreren Windungen bilden, wobei benachbarte Metaspuren durch ein Schutzband (Gᵢ) von mindestens einer Bitreihe getrennt sind, die als Schutzband-Bitreihe bezeichnet wird, wobei die Einrichtung umfasst:
- eine optische Einheit (10) zum Erzeugen von mindestens N Lichtflecken, Empfangen von mindestens N reflektierten Lichtflecken und Erzeugen von mindestens N analogen Signalen, die jeweils mit einem der reflektierten Lichtflecken verknüpft sind, um eine Metaspur (Tᵢ) parallel zu lesen, und
- Mittel (14) zum Verarbeiten von mindestens N der analogen Signale, um Inhaltsinformationen, die in der Metaspur (Tᵢ) gespeichert sind, wiederherzustellen,
**dadurch gekennzeichnet, dass** sie eine optische Einheit (10) zum Erzeugen eines Lichtfleckes, Empfangen eines reflektierten Lichtfleckes und Erzeugen eines analogen Signals, das mit dem reflektierten Lichtfleck verknüpft ist, umfasst, um Nicht-Inhaltsinformationen wiederherzustellen, die in der benachbarten Bitreihe des Schutzbands (Gᵢ) gespeichert sind.

5. Einrichtung nach Anspruch 4, wobei, wenn die Nicht-Inhaltsinformationen Taktdaten umfassen, die Verarbeitungsmittel (14) umfassen:
- einen Analog-Digital-Wandler (30) zum Empfangen von mindestens N der analogen Signale und Erzeugen von mindestens N digitalen Signalen,
- eine phasenstarre Schleifenschaltung (33) zum Empfangen eines der digitalen Signale, welches mit einem Lichtfleck verknüpft ist, welcher mindestens teilweise von der Bitreihe des Schutzbands (Gᵢ) reflektiert wird, so dass das digitale Signal die Nicht-Inhaltsinformationen trägt, und zum Erzeugen eines Taktkorrektursignals daraus,
- einen Abtastratenwandler, der durch das Taktkorrektursignal gesteuert wird, zum Empfangen von N der digitalen Signale und zum Erzeugen von N korrigierten digitalen Signalen,
- eine erste Detektionsschaltung zum Empfangen der N korrigierten digitalen Signale und zum Liefern von N Folgen von Bits, welche den Inhaltsinformationen entsprechen.

6. Einrichtung nach Anspruch 5, wobei, wenn die Nicht-Inhaltsinformationen Steuerungsdaten umfassen, die Verarbeitungsmittel (14) ferner eine zweite Detektionsschaltung (39) zum Empfangen des Taktkorrektursignals und Ableiten einer Folge von Bits daraus, welche den Steuerungsdaten entspricht, umfassen.

7. Einrichtung nach Anspruch 5 oder 6, wobei die optische Einheit (10) für das Erzeugen eines speziellen Lichtfleckes ausgelegt ist, der zum Lesen der Bitreihe des Schutzbandes (Gᵢ) bestimmt ist, und die phasenstarre Schleifenschaltung (33) das digitale Signal empfängt, das von dem speziellen Lichtfleck abgeleitet ist.

8. Einrichtung nach Anspruch 4, wobei, wenn die Nicht-Inhaltsinformationen Steuerungsdaten, jedoch keine Taktdaten umfassen, die Verarbeitungsmittel (14) umfassen:
- einen Analog-Digital-Wandler (30) zum Empfangen von mindestens N der analogen Signale und Erzeugen von mindestens N digitalen Signalen;
- einen Abtastratenwandler (32) zum Empfangen der mindestens N digitalen Signale und zum Erzeugen von mindestens N korrigierten digitalen Signalen,
- eine Detektionsschaltung, welche umfasst:
a) Mittel (36) zum Empfangen von N korrigierten digitalen Signalen und Ableiten eines Referenzsignals und von N Folgen von Bits, welche den Inhaltsinformationen entsprechen, daraus, und
b) Mittel (39) zum Empfangen eines korrigierten digitalen Signals, welches mit einem Lichtfleck verknüpft ist, welcher mindestens teilweise durch die Bitreihe des Schutzband (Gᵢ) reflektiert wird, so dass das korrigierte digitale Signal die Steuerungsdaten trägt, und zum Ableiten einer Folge von Bits daraus, die den Steuerungsdaten entspricht,
- eine Zeitwiederherstellungsschaltung (50) zum Empfangen des Referenzsignals und mindestens eines Teils der N korrigierten digitalen Signale und zum Erzeugen eines Zeitkorrektursignals, das zum Steuern des Abtastratenwandlers (32) verwendet wird.

## Revendications

1. Support de stockage sur disque optique (1) comportant des méta-pistes (Tᵢ) de N rangées de bits (Rⱼ), avec N>1, qui stocke des informations de contenu, les méta-pistes (Tᵢ) formant une spirale (3) ayant plusieurs tours, des tours adjacents des méta-pistes étant séparés par une bande de garde (Gᵢ) d'au moins une rangée de bit référencée comme une rangée de bit de bande de garde,
**caractérisé en ce qu'**au moins une rangée de bit de bande de garde (Gᵢ) stocke des informations de non-contenu.

2. Support de stockage (1) selon la revendication 1, dans lequel lesdites informations de non-contenu comprennent des données d'horloge à utiliser pour lire lesdites informations de contenu dudit support de stockage (1).

3. Support de stockage (1) selon l'une des revendications 1 ou 2, dans lequel lesdites informations de non-contenu comprennent des données de commande à utiliser pour lire/écrire des informations de contenu de/sur ledit support de stockage (1).

4. Dispositif pour lire un support de stockage sur disque optique (1) qui comporte des méta-pistes (Tᵢ) de N rangées de bits (Rⱼ), avec N>1, les méta-pistes (Tᵢ) formant une spirale (3) ayant plusieurs tours, dans lequel des méta-pistes adjacentes sont séparées par une bande de garde (Gᵢ) d'au moins une rangée de bit référencée comme une rangée de bit de bande de garde, ledit dispositif comprenant:
- une unité optique (10) pour générer au moins N spot lumineux, recevoir au moins N spot lumineux réfléchis et générer au moins N signaux analogiques associés chacun à un desdits spots lumineux réfléchis, de façon à lire en parallèle une méta-piste (Tᵢ), et
- des moyens (14) pour traiter au moins N desdits signaux analogiques de façon à récupérer des informations de contenu stockées dans ladite méta-piste (Tᵢ),
**caractérisé en ce qu'**il comprend une unité optique (10) pour générer un spot lumineux, recevoir un spot lumineux réfléchi et générer un signal analogique associé au spot lumineux réfléchi de façon à récupérer des informations de non-contenu stockées dans ladite rangée de bit de bande de garde (Gᵢ) adjacente.

5. Dispositif selon la revendication 4 dans lequel, lesdites informations de non-contenu comprenant des données d'horloge, lesdits moyens de traitement (14) comprennent:
- un convertisseur analogique/numérique (30) pour recevoir au moins N desdits signaux analogiques et générer au moins N signaux numériques,
- un circuit à boucle à verrouillage de phase (33) pour recevoir un desdits signaux numériques qui est associé à un spot lumineux qui est au moins partiellement réfléchi par ladite rangée de bit de bande de garde (Gᵢ) pour que ledit signal numérique contienne lesdites informations de non-contenu, et pour en générer un signal de correction d'horloge,
- un convertisseur de débit d'échantillon commandé par ledit signal de correction d'horloge, pour recevoir N desdits signaux numériques pour générer N signaux numériques corrigés,
- un premier circuit de détection pour recevoir lesdits N signaux numériques corrigés et pour fournir N séquences de bits qui correspondent auxdites informations de contenu.

6. Dispositif selon la revendication 5, dans lequel, lesdites informations de non-contenu comprenant des données de commande, lesdits moyens de traitement (14) comprennent de plus un deuxième circuit de détection (39) pour recevoir ledit signal de correction d'horloge et en dériver une séquence de bits qui correspond auxdites données de commande.

7. Dispositif selon la revendication 5 ou 6, dans lequel ladite unité optique (10) est conçue pour générer un spot lumineux spécifique dédié à la lecture de ladite rangée de bit de bande de garde (Gᵢ), et ledit circuit à boucle à verrouillage de phase (33) reçoit le signal numérique dérivé dudit spot lumineux spécifique.

8. Dispositif selon la revendication 4, dans lequel, lesdites informations de non-contenu comprenant des données de commande à l'exclusion de données d'horloge, lesdits moyens de traitement (14) comprennent:
- un convertisseur analogique/numérique (30) pour recevoir au moins N desdits signaux analogiques et générer au moins N signaux numériques,
- un convertisseur de débit d'échantillon (32) pour recevoir lesdits au moins N signaux numériques et pour générer au moins N signaux numériques corrigés,
- un circuit de détection comprenant:
a) des moyens (36) pour recevoir N signaux numériques corrigés et en dériver un signal de référence et N séquences de bits qui correspondent auxdites informations de contenu, et
b) des moyens (39) pour recevoir un signal numérique corrigé qui est associé à un spot lumineux qui est au moins partiellement réfléchi par ladite rangée de bit de bande de garde (Gᵢ) pour que ledit signal numérique corrigé contienne lesdites données de commande, et en dériver une séquence de bits correspondant auxdites données de commande,
- un circuit de récupération de temps (50) pour recevoir ledit signal de référence et au moins une partie desdits N signaux numériques corrigés, et pour générer un signal de correction de temps utilisé pour commander ledit convertisseur de débit d'échantillon (32).
